**Europäisches Patentamt**

**European Patent Office**

**Office européen des brevets**

(11) Veröffentlichungsnummer: **0 499 909 A1**

# EUROPÄISCHE PATENTANMELDUNG

(21) Anmeldenummer: **92102116.8**

(22) Anmeldetag: **08.02.92**

(51) Int. Cl.5: **A01F 15/10**, A01F 15/08, A01F 15/07

(30) Priorität: **19.02.91 DE 4105078**

(43) Veröffentlichungstag der Anmeldung: **26.08.92 Patentblatt 92/35**

(84) Benannte Vertragsstaaten: **DE ES FR GB IT NL**

(71) Anmelder: **DEERE & COMPANY**
**1 John Deere Road**
**Moline, Illinois 61265(US)**

(72) Erfinder: **Viaud, Jean**
**105, Rue de Folpersviller**
**F-57200 Sarreguemines(FR)**

(74) Vertreter: **Feldmann, Bernhard et al**
**DEERE & COMPANY European Office Patent**
**Department Steubenstrasse 36-42**
**W-6800 Mannheim 1(DE)**

(54) **Rundballenpresse.**

(57) 2.1. Bei Rundballenpressen (10) kann es beim Eintritt des Guts in den Ballenpreßraum (14) zu Verstopfungen kommen, wenn der sich darin befindliche Ballen (15) so schwer ist, daß er kein zusätzliches Gut zwischen sich und die ihm zugelegene Oberfläche des ihn tragenden Förderers (20) gelangen läßt.

2.2. Der Ballenpreßraum (14) wird mit einem Wandteil (18) versehen, der so beweglich ist, daß er den Ballen (15) aus seiner Bahn auslenkt und ihn im Bereich des eintretenden Guts von dem Förderer (20) abhebt.

2.3. Derartige Rundballenpressen (10) werden in der Landwirtschaft verwendet.

FIG. 1

Die Erfindung betrifft eine Rundballenpresse mit einem Ballenpreßraum und einem Aufsammler, wobei am Boden des Ballenpreßraums ein Förderer vorgesehen ist, auf dem sich der Ballen abstützen kann.

Rundballenpressen werden insbesondere in der Landwirtschaft dazu benutzt, auf dem Boden liegende Erntegüter aufzusammeln und in Ballen zu pressen. Während des Preßvorgangs werden diese Ballen in ihrem äußeren Bereich relativ fest gepreßt und drücken sich aufgrund ihres Gewichts fest an die den Ballenpreßraum umgebende Wand an; dies ist unabhängig davon, ob es sich um eine sogenannte Weichkern- oder eine Hartkernpresse handelt.

Derartige Rundballenpressen sind bekannt aus der DE-OS-34 19 535, DE-OS-35 01 062 und der GB-A-2 227 711.

Aus der letztgenannten Druckschrift ist es ferner bekannt, eine der Walzen des am Boden vorgesehenen Förderers, auf dem der Ballen während seiner Bildung ruht, oval auszubilden, so daß der Ballen ständig von der Walze angehoben wird und aufgrund seiner Reibung an der Wand in dem angehobenen Zustand verharrt. Zwischen der ovalen Walze und der Einlaßöffnung bildet sich dadurch ständig wiederkehrend ein größerer Einlaßquerschnitt, durch den das Gut ungehindert in den Ballenpreßraum eintreten kann.

Eine derart unrund umlaufende Walze stellt hohe Anforderungen an die Festigkeit ihrer Lager und ein vergrößerter Einlaßspalt entsteht nur, wenn der Ballen aufgrund seiner Reibung an der Wand in der angehobenen Stellung verharrt und einen ausreichend festen Mantel enthält.

Die der Erfindung zugrunde liegende Aufgabe wird darin gesehen, eine Rundballenpresse vorzuschlagen, bei der das Gut stets ohne Hindernisse in den Ballenpreßraum eintreten kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird durch eine Verlagerung des Ballens entweder der Druck des Ballens auf den am Boden vorgesehenen Förderer verringert oder es bildet sich am Einlaß ein Spalt. In beiden Fällen kann das hinzukommende Gut leichter zwischen den Außenumfang des Ballens und die diesem zugelegene Oberfläche des Förderers eingezogen werden. Der Ballen dreht sich zudem so lange und unabhängig von einer zwischen ihm und den Wänden bestehenden Reibkraft, bis die Verstellvorrichtung eine andere Stellung einnimmt. Die Verstellvorrichtung kann beispielsweise als Bügel oder Schild ausgebildet sein, die in den Ballenpreßraum hineingeschwenkt werden.

Ohne eine separate Verstellvorrichtung zu verwenden, kann die vorgenannte Wirkung erreicht werden, indem ein Wandteil des Ballenpreßraums beweglich gestaltet und dazu benutzt wird, den Ballen zu verlagern.

Weist der betreffende zu verstellende Wandteil eine konstante Form auf, ist es einfacher, ihn zu verschwenken und den Ballen zu verlagern, als wenn er aus wenigen Rollen besteht, zwischen denen sich Riemen oder dergl. erstrecken. Ein derartiger Wandteil konstanter Form kann mittels Walzen gebildet werden, die nebeneinander auf einer bestimmten Bahn in einem Rahmen oder in Seitenwänden gelagert sind oder mittels eines in mehreren Kanälen geführten Endlosförderers.

Am wirkungsvollsten wird die Entlastung im Bereich des eintretenden Guts, wenn der Teil der Wand mit Bezug auf die Einlaßöffnung des Ballenpreßraums und die Bewegungsrichtung des Ballens stromaufwärts gelegen ist.

Das Maß zur Verstellung des Wandteils kann am geeignetsten von der Menge des zugeführten Guts abgeleitet werden, wozu im Aufnahmebereich ein Tastorgan vorgesehen wird, das in vielfältiger Weise ausgebildet sein kann.

In einer einfachen, robusten Ausführung enthält das Tastorgan eine höhenbewegliche Druckwalze, die während der Gutzuführung auf dem Gut aufliegt und auf die Verstelleinrichtung für den Wandteil wirkt, die zwei über ein Gelenk einenends miteinander beweglich verbundene Hebel aufweist, von denen einer anderenends an einem ortsfesten Lager und der andere anderenends an dem Wandteil angreift, wobei die Druckwalze in dem Gelenk gelagert ist.

In einer anderen, mehr Einflußmöglichkeiten zulassenden Ausführung ist als Tastorgan ein Entfernungsfühler und als Verstellvorrichtung ein Motor vorgesehen, der abhängig von dem durch den Entfernungsfühler ermittelten Signal über die Dicke des Gutstroms den Motor verstellt.

Ein vorstehend genannter Endlosförderer enthält Tragleisten oder Stangen und einen flexiblen Träger oder ein Band, wobei die Tragleisten zwischen sich einen Abstand belassen, und der Abstand zwischen den Tragleisten von dem flexiblen Träger überspannt wird.

In der Zeichnung ist ein nachfolgend näher beschriebenes Ausführungsbeispiel der Erfindung dargestellt. Es zeigt:

Fig. 1     eine erfindungsgemäße Rundballenpresse im ungefüllten Zustand in Seitenansicht und in schematischer Darstellung,

Fig. 2     die Rundballenpresse aus Fig. 1 in gefülltem Zustand in Seitenansicht und in schematischer Darstellung,

Fig. 3     einen Endlosförderer der Rundballenpresse in perspektivischer Darstellung,

Fig. 4 den Endlosförderer aus Fig. 3 im eingebauten Zustand und

Fig. 5 ein Detail des Endlosförderers in Seitenansicht.

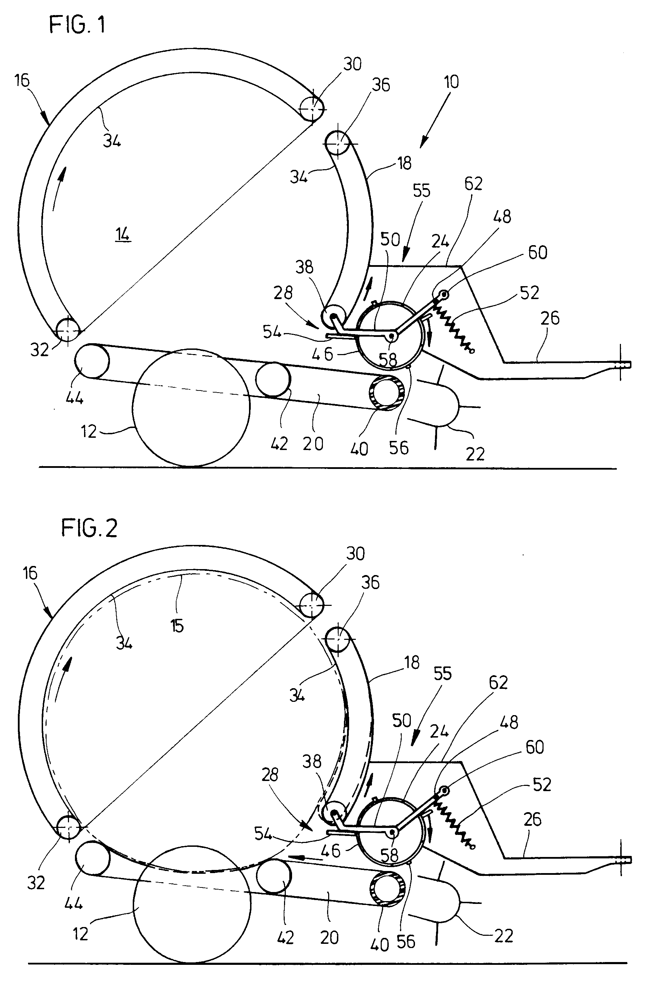

Eine erfindungsgemäße Rundballenpresse 10 stützt sich über Räder 12 beweglich auf dem Boden ab und enthält einen Ballenpreßraum 14, der von einem ersten, rückwärtigen Wandteil 16 und einem zweiten, vorderen Wandteil 18 umfaßt wird. Mit Blick auf Figur 1 schließt rechts unten an dem Ballenpreßraum 14 ein Förderer 20 an, an dessen anderen Ende ein Aufsammler 22 vorgesehen ist. Oberhalb des Förderers 22 ist ein Tastorgan 24 angeordnet, und zur Fortbewegung der Rundballenpresse 10 über ein Feld ist eine Deichsel 26 angebracht, die mit dem nicht gezeichneten Chassis und einem Rahmenteil 62 der Rundballenpresse 10 vorzugsweise starr verbunden ist.

Die Rundballenpresse 10 ist in dem vorliegenden Ausführungsbeispiel mit einem Ballenpreßraum 14 versehen, dessen Volumen im wesentlichen konstant ist. Zur Aufnahme von auf dem Boden liegenden Gut wird die Rundballenpresse 10 mit ihrer Deichsel 26 an einen Ackerschlepper angehängt und so über das Feld bewegt, daß der Aufsammler 22 das in Schwaden abgelegte Gut erfassen kann. Über den Förderer 20 wird das Gut durch eine Einlaßöffnung 28 in den Ballenpreßraum 14 geleitet, wo es schließlich zu einem Ballen 15 gepreßt wird.

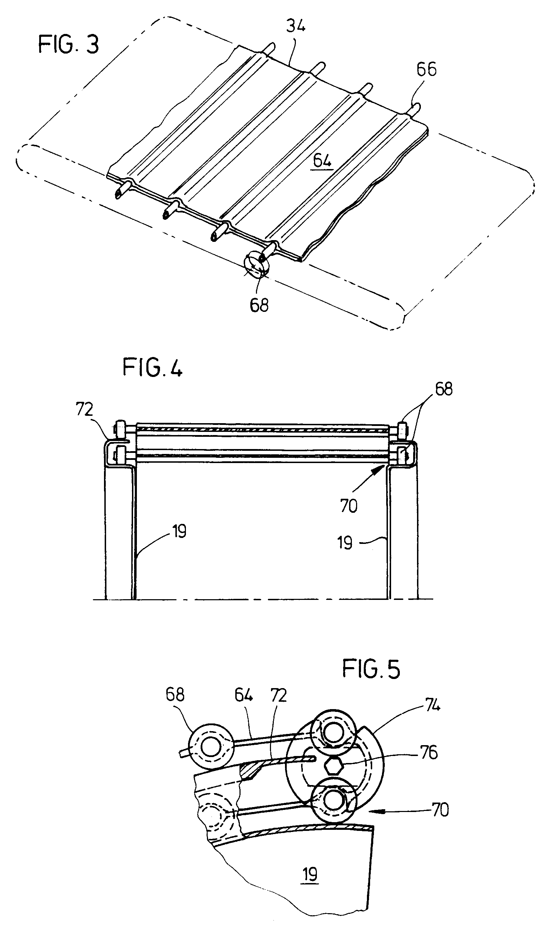

Der Ballenpreßraum 14 ist auf seinem Umfang im wesentlichen von den Wandteilen 16, 18 umgeben, während er stirnseitig von lediglich in den Figuren 4 und 5 ersichtlichen Seitenwänden 19 geschlossen wird; diese Seitenwände 19 verlaufen in der bzw. parallel zu der Zeichnungsebene.

Der erste Wandteil 16 nimmt mit seinem Innenumfang die Form eines Halbkreises ein und umfaßt den Ballenpreßraum 14 zu ca. 180°. An seinen Endbereichen ist im oberen Bereich eine Welle 30 und im unteren Bereich eine Welle 32 vorgesehen. Der erste Wandteil 16 kann um die Welle 30 mit Blick auf Figur 2 im Uhrzeigerdrehsinn nach oben geschwenkt werden, um einen gebildeten Ballen 15 auszuwerfen. Hierzu sind herkömmliche, nicht gezeigte Betätigungsmittel vorgesehen. Der Wandteil 16 weist keine starre, sondern eine bewegliche Oberfläche auf, die von einem weiter unten beschriebenen Endlosförderer 34 gebildet wird. Die obere Welle 30 ist in den vorgenannten Seitenwänden 19 ortsfest gelagert und trägt somit den ersten Wandteil 16.

Der zweite, vordere Wandteil 18 weist die gleiche Krümmung auf wie der erste rückwärtige Wandteil 16; er erstreckt sich jedoch über einen wesentlich geringeren Bogenbereich, nämlich nur ca. 70°. Seine Innenfläche liegt auf demselben Kreisbogen wie die des ersten Wandteils 16. In seinen Endbereichen sind ebenfalls Wellen 36 (oben) und 38 (unten) vorgesehen, die unter anderem der Führung des Endlosförderers 34 dienen. Die obere Welle 36 ist in den Seitenwänden 19 ortsfest gehalten und liegt unmittelbar neben und parallel zu der Welle 30, so daß zwischen den beiden Wandteilen 16, 18 kaum ein Spalt besteht. Die untere Welle 38 kann mit dem gesamten Wandteil 18 um die obere Welle in einem begrenzten Maß quer zur Zeichnungsebene schwenken; Figur 2 zeigt den vorderen Wandteil 18 in einer verschwenkten Stellung in unterbrochenen Linien.

Nahezu der gesamte verbleibende Umfangsbereich des Ballenpreßraums 14 wird schließlich von dem Förderer 20 umschlossen. Dieser Förderer 20 erstreckt sich von dem Aufsammler 22 an den Rädern 12 vorbei bis unmittelbar an die Welle 32 am unteren Ende des rückwärtigen Wandteils 16. Der auch bei diesem Förderer 20 verwendete Endlosförderer 34 erstreckt sich mit seinen Trums im leeren Zustand des Ballenpreßraums 14 in einer im wesentlichen horizontalen Ebene und wird von einer vorderen, einer mittleren und einer rückwärtigen Walze 40, 42, 44 getragen. Die vordere und/oder die rückwärtige Walze 40, 44 kann zum Antrieb des Endlosförderers 34 herangezogen werden. Die vordere Walze 42 befindet sich im wesentlichen unterhalb des Tastorgans 24, und die rückwärtige Walze 44 grenzt unmittelbar an die untere Welle 32 des ersten Wandteils 16 an. Die mittlere Walze 42 ist so angeordnet, daß sie zusammen mit der rückwärtigen Walze 44 regelmäßig eins von zwei Auflagern für den sich bildenden Ballen 15 bildet, wobei der sich zwischen der mittleren und der rückwärtigen Walze 42 und 44 erstreckende Teil des oberen Trums des Endlosförderers 34 entsprechend der Außenform des Ballens 15 nach unten gespannt wird. Der Endlosförderer 34 des unteren Förderers 20 wird mit seinem oberen Trum von vorne nach hinten in der angegebenen Pfeilrichtung angetrieben.

Der Aufsammler 22 ist wie herkömmlich als Pick-up ausgebildet und weist somit ständig nach oben und hinten umlaufende Zinken auf, die das Gut, wie Stroh, Heu, Silage etc. vom Boden anheben und es auf das obere Trum des Förderers 20 werfen.

Das Tastorgan 24 enthält insbesondere eine Druckwalze 46, einen Schwenkarm 48, einen Stellarm 50, einen Kraftspeicher 52 und einen Abstreifer 54, die mit dem vorderern Wandteil 18 eine mechanische Verstellvorrichtung 55 bilden, die die Bewegungsbahn des Ballens 15 verändern kann.

Die Druckwalze 46 ist vorzugsweise als zylindrischer, nicht angetriebener Hohlkörper ausgebildet und auf seinem Außenumfang mit mehreren, gleichmäßig verteilt angeordneten Mitnehmerleisten 56 bestückt. Der Durchmesser der Druckwalze 46 ist wesentlich größer als der der vorderen Walze 40, so daß sie unter Mitwirkung der Mitnehmerleisten 56 bei Kontakt mit dem auf dem Förderer 20 geförderten Gut in Drehung versetzt wird und das Gut ungehindert passieren läßt.

Der Schwenkarm 48 ist in einem Gelenk 58, in dem auch die Druckwalze 48 drehbar gelagert ist, mit dem Stellarm 50 schwenkbar verbunden und kann sich innerhalb der Zeichenebene bewegen. Hierzu ist er ferner in einem Lager 60 an einem Rahmenteil 62 der Rundballenpresse 10 in der Zeichenebene schwenkbar befestigt.

Der Stellarm 50 greift einenends an dem Gelenk 58 und anderenends an der unteren Welle 38 jeweils schwenkbar an.

Der Kraftspeicher 52, der in der Art einer mechanischen Schraubenzugfeder gehalten ist, greift einenends an dem Rahmenteil 62 und anderenends an dem Schwenkarm 48 zwischen dem Gelenk 58 und dem Lager 60 an. Der Kraftspeicher 52 wirkt derart, daß der Schwenkarm 48 entgegen dem Uhrzeigerdrehsinn auf den Förderer 20 zubewegt wird.

Der Abstreifer 54 ist zwischen dem Einlaß zu dem Ballenpreßraum 14 und der Druckwalze 46 vorgesehen und kommt bis nahe an die Mitnehmerleisten 56 heran, so daß sich kein Gut auf die Druckwalze 46 aufwickeln kann.

Der Schwenk- und der Stellarm 48 und 50 bilden gemeinsam einen Hebelmechanismus, der, wie die Kraftspeicher 52, an beiden Stirnseiten der Druckwalze 46 in identischer Weise vorgesehen ist und bewirkt, daß die Druckwalze 46 mit einer vorbestimmbaren Kraft auf die auf dem Förderer 20 geführte Gutmatte gedrückt wird, wie auch in einer bestimmten Lage gehalten wird, wenn kein Gut befördert wird. Der so gebildete Hebelmechanismus nimmt normalerweise keine gestreckte, sondern eine nach unten ausgelenkte Stellung ein, d. h. der Schwenk- und der Stellarm 48 und 50 erstrecken sich mit ihren Längsmittenachsen normalerweise nicht in der derselben Richtung; vielmehr konvergieren sie und treffen sich an einem Punkt unterhalb einer gedachten Linie zwischen dem Lager 60 und dem Gelenk 58.

Nach alledem ergibt sich, daß lediglich das Lager 60 ortsfest ist; die Druckwalze 46 ist höhenbeweglich, und der Stellarm 50 kann sich mit dem zweiten Wandteil 18 auf einem Schwenkbogen um die obere Welle 36 bewegen. Der Hebelmechanismus wird dadurch auf seine gestreckte Lage zubewegt, daß die Druckwalze 46 angehoben wird und somit das Gelenk 58 verlagert. Ein derartiges Anheben der Druckwalze 46 findet statt, wenn mehr Gut von dem Aufsammler 22 nach oben befördert wird, als durch den Durchlaß zwischen der Unterseite der Druckwalze 46 und dem oberen Trum des Förderers 20, bzw. der vorderen Walze 40 momentan paßt.

Infolge der sich somit erhöhenden Gutmatte wird die Druckwalze 46 entgegen der Kraft des Kraftspeichers 52 angehoben und nähert den Hebelmechanismus seiner gestreckten Lage. Da der Schwenkarm 48 aufgrund des ortsfesten Lagers 60 nicht ausweichen kann, vollführt die Druckwalze 46 beim Anheben eine Schwenkbewegung im Uhrzeigerdrehsinn um das Lager 60 und schiebt dabei den Stellarm 50 zum Ballenpreßraum 14 hin, wodurch der zweite Wandteil 18 ebenfalls im Uhrzeigerdrehsinn um die obere Welle 36 geschwenkt wird. Es zeigt sich somit, daß das Maß, um das die Druckwalze 46 aufgrund des aufgenommenen Guts angehoben wird, in direktem Verhältnis zu dem Schwenkmaß des zweiten Wandteils 18 steht.

Aufgrund der vorbeschriebenen Verstellung des zweiten Wandteils 18 wird der Ballenpreßraum 14 oberhalb der Einlaßöffnung 28 mehr oder weniger verengt, d. h. nach innen eingedrückt oder aus dieser Stellung erweitert. Im erstgenannten Fall bewirkt dies, daß der Ballen 15 geringfügig von der mittleren Walze 42 angehoben wird und sein Gewicht hauptsächlich auf die rückwärtige Walze 44 verlagert. Da der vordere Wandteil 18 in der nach innen geschwenkten Stellung verharrt und erst bei einer Änderung der Höhe der zugeführten Gutmatte erneut verschwenkt wird, dreht der Ballen 15 weiterhin in der neuen Lage. Infolgedessen wird je nach dem Maß der Einwärtsbewegung des vorderen Wandteils 18 der Ballen 15 entweder vollkommen von dem Förderer 20 im Bereich der mittleren Walze 42 abgehoben und es bildet sich dort ein keilförmiger Spalt, oder er reduziert die Auflagekraft in diesem Bereich. In beiden Fällen wird es dem hinzugeführten Gut erleichtert, zwischen den Außenumfang des Ballens 15 und die Oberfläche des Förderers 20 einzudringen und mitgenommen zu werden. Da der Ballen 15 je mehr von der vorderen Walze 40 angehoben wird, je größer die zwischen der Druckwalze 46 und dem Förderer 20 hindurch geführte Gutmenge ist, besteht auch bei großen Gutmengen keine Verstopfungsgefahr.

In dem bevorzugten Ausführungsbeispiel ist als Tastorgan 24 eine Druckwalze 46 vorgesehen, die mittels des Stellarms 50 auf den vorderen Wandteil 18 wirkt. Statt dessen könnte, was allerdings nicht gezeigt ist, auch ein akustischer oder optischer Abstandsmesser verwendet werden, der die Dicke der zugeführten Gutmatte erfaßt und sie einem Steuergerät aufgibt. Dieses Steuergerät könnte hieraus ein Ausgangssignal bilden, das auf einen Stellmotor wirkt, der die Stellung des vorderen Wandteils 18 verändert.

Figur 3 zeigt einen als Förderer 20 ausgebildeten und in den Wandteilen 16, 18 verwendeten, vorteilhaften Endlosförderer 34.

Dieser Endlosförderer 34 enthält ein Band 64 aus Gummi, das im wesentlichen die Breite des Ballenpreßraums 14 einnimmt. Abweichend hiervon kann jedes andere flexible Band aus Stoff, Kunststoff oder Metall verwendet werden. In das Band 64 sind Stangen 66 eingelassen, die sich zu beiden Seiten über das Band hinaus erstrecken. Auf die Endbereiche der Stangen 66 sind Rollen 68 drehbar aufgesetzt, deren Zweck im weiteren erläutert wird.

Die Figuren 4 und 5 zeigen den Endlosförderer 34 in einem eingebauten Zustand, wie er sich zwischen den beiden Seitenwänden 19 erstreckt. Hierzu ist auf dem äußeren Rand jeder Seitenwand 19 ein U-förmiger und sich zu dem Ballenpreßraum 14 hin öffnender Kanal 70 vorgesehen, in dem die Rollen 68 eines Trums bewegt werden, während die Rollen 68 des anderen Trums auf der äußere Fläche einer Wand 72 des Kanals 70 abrollen.

Figur 5 zeigt das obere Ende eines Kanals 70 mit einem Umkehrrad 74, das mittels einer Schraube 76 drehbar an der Seitenwand 19 gelagert ist. Auf dem Außenumfang des Umkehrrads 74 sind Einbuchtungen 78 vorgesehen, in denen die über das Band 64 hinausragenden Stummel der Stangen 66 aufgenommen werden können. Bei jedem Wandteil 16, 18 und bei dem Förderer 20 ist wenigstens eines der oder ein Paar Umkehrräder 74 angetrieben, so daß auf diese Weise der Endlosförderer 34 bewegt werden kann.

Diese Art eines Endlosförderers 34 hat den Vorteil, daß er aufgrund seiner geschlossenen Oberfläche kleine Gutteile nicht aus dem Ballenpreßraum 14 entfallen läßt, sondern sie in den Ballen 15 einwickelt. Die Stangen 66 sorgen zudem dafür, daß sich der Endlosförderer 34 nicht in sich verzieht. Schließlich sorgen die Rollen 38 innerhalb des Kanals 70 für eine einwandfreie Seitenführung des Endlosförderers 34.

Die Form des Kanals 70 bzw. der mehreren Kanäle 70 an den Wandteilen 16, 18 bzw. an dem Förderer 20 entspricht der vorbestimmten Laufbahn des Endlosförderers 34 und ist somit bei den Wandteilen 16, 18 so gekrümmt, wie es aus Figur 1 hervorgeht.

**Patentansprüche**

1. Rundballenpresse (10) mit einem Ballenpreßraum (14) und einem Aufsammler (22), wobei am Boden des Ballenpreßraums (14) ein Förderer (20) vorgesehen ist, auf dem sich der Ballen (15) abstützen kann, gekennzeichnet durch eine Verstellvorrichtung, die an dem Ballen (15) in einer von dem Förderer (20) weggerichteten Richtung zur Anlage bringbar ist, wobei das Maß ihrer Verstellung von der Menge des zugeführten Guts abhängt.

2. Rundballenpresse nach Anspruch 1, dadurch gekennzeichnet, daß die Verstellvorrichtung von einem den Ballenpreßraum (14) umgebenden Wandteil (18) gebildet wird.

3. Rundballenpresse nach Anspruch 2, dadurch gekennzeichnet, daß der Wandteil (18) eine konstante Form aufweist.

4. Rundballenpresse nach Anspruch 2 oder 3, dadurch gekennzeichnet, daß der Wandteil (18) aus mehreren parallel zueinander angeordneten Walzen besteht.

5. Rundballenpresse nach einem oder mehreren der vorherigen Ansprüche, dadurch gekennzeichnet, daß der Wandteil (18) mit Bezug auf die Einlaßöffnung (28) des Ballenpreßraums (14) und die Bewegungsrichtung des Ballens (15) stromaufwärts gelegen ist.

6. Rundballenpresse nach einem oder mehreren der vorherigen Ansprüche, gekennzeichnet durch ein oberhalb des Aufsammlers (22) angeordnetes Tastorgan (24), so daß das Gut zwischen dem Aufsammler (22) und dem Tastorgan (24) hindurch geführt wird.

7. Rundballenpresse nach Anspruch 6, dadurch gekennzeichnet, daß das Tastorgan (24) eine höhenbewegliche Druckwalze (26) enthält, die während der Gutzuführung auf dem Gut aufliegt und auf die Verstelleinrichtung für den Wandteil (18) wirkt.

8. Rundballenpresse nach Anspruch 7, dadurch gekennzeichnet, daß die Verstelleinrichtung zwei über ein Gelenk (58) einenends miteinander beweglich verbundene Schwenk- und Stellarme (48, 50) aufweist, von denen einer anderenends an einem ortsfesten Lager (60) und der andere anderenends an dem Wandteil angreift, wobei die Druckwalze (46) in dem Gelenk (58) gelagert ist.

9. Rundballenpresse nach einem oder mehreren der vorherigen Ansprüche, dadurch gekennzeichnet, daß wenigstens der Wandteil (18) von wenigstens einem Endlosförderer (34) gebildet wird.

10. Rundballenpresse nach Anspruch 9, dadurch gekennzeichnet, daß der Endlosförderer (34) Stangen (66) und ein flexibles Band (64) enthält, wobei die Stangen (66) zwischen sich einen Abstand belassen und der Abstand zwischen den Stangen (66) von dem flexiblen Band (64) überspannt wird.

11. Rundballenpresse nach Anspruch 10, dadurch gekennzeichnet, daß das Band (64) als ein endloses Gummiband ausgebildet ist.

12. Rundballenpresse nach Anspruch 10 oder 11, dadurch gekennzeichnet, daß die Stangen (66) endseitig mit Rollen (68) bestückt sind.

13. Rundballenpresse nach Anspruch 12, gekennzeichnet durch Kanäle (70), in denen die Stangen (66) mit den Rollen (68) geführt sind.

14. Rundballenpresse nach einem oder mehreren der vorherigen Ansprüche, dadurch gekennzeichnet, daß als Tastorgan (24) ein Entfernungsfühler und als Verstellvorrichtung ein Motor vorgesehen sind, der abhängig von dem durch den Entfernungsfühler ermittelten Signal über die Dicke des Gutstroms verstellt wird.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | DE-A-3 501 062 (C. VAN DER LELY N.V.) <br> * Seite 13, Zeile 1 - Seite 14, Zeile 30; Seite 16, Zeilen 6-28; Seite 23, Zeile 28 - Seite 24, Zeile 35; Abbildungen 1,3,4 * | 1-5,9, 10,12, 13, | A 01 F 15/10 <br> A 01 F 15/08 <br> A 01 F 15/07 |
| D,A | --- | 6,7 | |
| A | US-A-4 516 389 (G.M. CORE) <br> * Spalte 3, Zeile 59 - Spalte 4, Zeile 20; Abbildungen 2,6-8 * <br> --- | 1,6,8 | |
| D,A | GB-A-2 227 711 (DEERE & COMPANY) <br> * Zusammenfassung; Abbildungen 4-9 * <br> ----- | 1 | |

**RECHERCHIERTE SACHGEBIETE (Int. Cl.5)**

A 01 F

Der vorliegende Recherchenbericht wurde für alle Patentansprüche erstellt

| Recherchenort | Abschlußdatum der Recherche | Prüfer |
|---|---|---|
| BERLIN | 24-04-1992 | MARTIN DEL RIO A |

EPO FORM 1503 03.82 (P0403)